# EUROPÄISCHE PATENTSCHRIFT

(11) **EP 2 268 542 B1**
(45) Veröffentlichungstag und Bekanntmachung des Hinweises auf die Patenterteilung: **31.07.2013**
(21) Anmeldenummer: 09722127.9
(22) Anmeldetag: 12.02.2009
(51) Int. Cl.: B64D 11/00

(54) **UNIVERSELLE ANORDNUNG ZUM AUFNEHMEN EINER VORHANGSCHIENE FÜR EINEN TRENNVORHANG**
UNIVERSAL ARRANGEMENT FOR HOLDING A CURTAIN RAIL FOR A SEPARATING CURTAIN
SYSTÈME UNIVERSEL POUR MAINTENIR UN RAIL DE RIDEAU POUR UN RIDEAU DE SÉPARATION

(30) Priorität: 19.03.2008 DE 102008014929; 19.03.2008 US 69937
(43) Veröffentlichungstag der Anmeldung: 05.01.2011
(73) Patentinhaber: Airbus Operations GmbH, 21129 Hamburg (DE)
(72) Erfinder: WARNER, Holger, 21635 Jork (DE); NEUMANN, Andreas, 24558 Wakendorf (DE); MOSLER, Michael, 22767 Hamburg (DE)
(74) Vertreter: Kopf, Korbinian Paul
(86) Internationale Anmeldenummer: PCT/EP2009/051631
(87) Internationale Veröffentlichungsnummer: WO 2009/115378

(56) Entgegenhaltungen:
- EP-A- 0 407 767
- DE-U1-202007 013 134
- US-A- 3 931 994

## Beschreibung

### Gebiet der Erfindung

Die Erfindung betrifft eine Anordnung zur Aufnahme einer Vorhangschiene für einen Vorhang zum Abtrennen mindestens zweier Bereiche in einer Kabine eines Fahrzeugs.

### Technologischer Hintergrund der Erfindung

Derartige Anordnungen, die auch unter den Begriffen "Header Panel" oder "Curtain Header" bekannt sind, werden beispielsweise in einer Flugzeugkabine dazu verwendet, eine Vorhangschiene aufzunehmen und gleichzeitig eine blickdichte und/oder lichtdichte Abtrennung zwischen der Oberkante eines in der Vorhangschiene geführten Trennvorhangs und der darüber befindlichen Kabinendecke zu schaffen. Üblicherweise weist die Anordnung Verkleidungswände auf, die den Raum zwischen der Vorhangschiene und der Kabinendecke auf beiden Seiten bis mindestens zu der Oberkante des Vorhangs verdecken. Die Verkleidungswände haben neben dem Sichtschutz und der Funktion als Anbringungsort von Hinweisschildern oftmals keine weitergehende Funktion, so dass der zwischen den Verkleidungswänden entstehende Raum im Prinzip verschwendet wird.

Durch die vom Flugzeugbetreiber abhängige Gestaltung der Flugzeugkabine ergeben sich für eine Vorhangschiene unterschiedliche Einbauanforderungen, denn die Vorhangschiene könnte etwa zwischen zwei Monumenten (als Monument gilt beispielsweise eine Flugzeugküche, eine Flugzeugtoilette und ein Stauschrank), einem Monument und einer Trennwand oder zwischen zwei Trennwänden montiert werden. Demzufolge existieren unzählige unterschiedliche Vorhangschienenverläufe und damit auch eine Vielzahl möglicher Curtain-Header-Konturen. Dies führt insbesondere dazu, dass im Stand der Technik keine standardisierten Lösungen zur Gestaltung solcher Curtain Header existieren und ein überwiegender Anteil aller in einer Flugzeugkabine verbauten Exemplare komplette Neuentwicklungen sind. Daraus resultieren hohe Konstruktionskosten, hohe Fertigungskosten, eine Erschwerung der Flexibilität bei der Umkonfiguration einer Flugzeugkabine in den Bereichen zwischen zwei Kabinenzonen und bei späterer Änderung der Kabinenkonfiguration fallweise die Notwendigkeit der Konstruktion neuer Curtain Header. Weiterhin sind bei deren Auslegung während der Konstruktionsphase späte Änderungen schwierig und kostenintensiv, wenn bereits Fertigungsvorbereitungen getroffen wurden.

US 3 931 994 A offenbart eine Abtrennung für ein Fahrzeug, insbesondere ein Automobil, mit zwei Abtrennungsteilen, die über Scharniere miteinander verbunden sind.

DE 20 2007 013 134 U1 offenbart ein Leichtbauelement, das zur Befestigung von Raumteilern in Flugzeuginnenräumen geeignet ist.

EP 0 407 767 A offenbart eine Trageinrichtung für einen Vorhang zur Abtrennung von Kabinenbereichen, die aus einem Querträger besteht, der zwei gelenkig miteinander verbundene Trägerelemente aufweist.

### Zusammenfassung der Erfindung

Die Aufgabe der Erfindung ist daher, eine Anordnung zur Aufnahme eines Vorhangs vorzuschlagen, die möglichst standardisiert ist und ein schnelles und flexibles Anpassen an verschiedene Kabinenkonfigurationen erlaubt. Eine weitere Aufgabe der Erfindung ist, eine Anordnung vorzuschlagen, bei der der zwischen den seitlichen Verkleidungswänden oberhalb einer in der Anordnung befindlichen Vorhangschiene entstehende Raum effizient genutzt werden kann.

Die Aufgabe wird gelöst durch eine Anordnung nach dem unabhängigen Anspruch 1. Vorteilhafte Weiterbildungen sind den Unteransprüchen zu entnehmen.

Im Gegensatz zum Stand der Technik wird bei der erfindungsgemäßen Anordnung (bzw. mit anderen Worten: bei dem erfindungsgemäßen Curtain Header) vorgeschlagen, die Fläche zur Aufnahme einer Vorhangschiene deutlich größer zu dimensionieren, als sie von der Vorhangschiene benötigt wird. Die Anordnung kann in einem Durchgangsbereich in der Kabine platziert werden, in dem ein Vorhang eingesetzt werden soll. Eine Vorhangschiene kann dann in verschiedenen Positionen und Winkeln an der erfindungsgemäßen Anordnung angebracht werden, so dass sie die jeweiligen Anforderungen an Lage und Winkel beispielsweise zwischen zwei Monumenten erfüllten kann. Bei der erfindungsgemäßen Anordnung ist es nicht nur möglich, im Wesentlichen gerade Vorhangschienen einzusetzen, sondern auch aufwändiger geformte Vorhangschienen sogar bei nachträglich vorgesehener Nachrüstung einer umkonfigurierten Kabine bei entsprechend ausgelegten Dimensionen der erfindungsgemäßen Anordnung zu integrieren, was beispielsweise bei neuen Einbauten oder zueinander verschobenen Einbauten eines neuen Kabinenlayouts notwendig sein könnte.

Bei einer besonders vorteilhaften Weiterbildung besteht die erfindungsgemäße Anordnung zumindest aus einem Bauteil, welches eine im Wesentlichen ebene Seite zum Aufnehmen einer Vorhangschiene der Anordnung aufweist und mindestens zwei variable Anbindungspunkte für die Vorhangschiene bereitstellt. Diese Anbindungspunkte sind bevorzugt innerhalb des Bauteils entlang zumindest einer Dimension verschiebbar ausgeführt, was etwa durch Schienen mit eingelassenen Anschraubkörpern bzw. Anschraubpunkten ausgeführt ist. Bei einer besonders bevorzugten Ausführungsferm weist das Bauteil insgesamt drei Schienen auf, in denen Anschraubpunkte verschiebbar gelagert sind, in die durch entsprechendes Verschieben der Anschraubpunkte innerhalb der Schienen zu den vorgesehenen Endpositionen eine nahezu beliebig formbare Vorhangschiene einschraubbar ist. Beim Anziehen der Befestigungsschrauben der Vorhangschiene in den Anschraubpunkten werden bevorzugt die Anschraubpunkte innerhalb der Schienen des Bauteils fixiert, so dass die Vorhangschiene zwar völlig variabel, aber dennoch fest an die erfindungsgemäße Anordnung anschraubbar ist.

Oberhalb des erfindungsgemäßen Bauteils - sofern dieses als ein zumindest bereichsweise ebenes Bauteil ausgeführt ist - schließen sich eine oder mehrere Verkleidungsteile zum Verkleiden des Zwischenraums zwischen dem Bauteil und der Kabinendecke an. Es ist jedoch auch möglich, das Bauteil so auszugestalten, dass es zwar auf der Aufnahmeseite für die Vorhangschiene eben ausgeführt ist, nach oben zur Kabinendecke hin aber auch die Funktion von üblichen Verkleidungsbauteilen erfüllt. Dazu ist denkbar, dass sich das Bauteil nach oben zur Kabinendecke hin erstreckt und zwischen der ebenen Aufnahmefläche und den sich nach oben erstreckenden Teilen etwa einen rechten Winkel einschließt. Andere Winkel sind ebenso realisierbar und hängen vom Geschmack des Flugzeugbetreibers ab, es sollte jedoch auf eine gute Lesbarkeit von Hinweisschildern an den schräg gestellten Flächen geachtet werden.

In einer besonders bevorzugten Ausführungsform weist die erfindungsgemäße Anordnung oberhalb der Aufnahmeseite für die Vorhangschiene einen Hohlraum auf, der sich bis zur Kabinendecke hin erstreckt und seitlich von Verkleidungsbauteilen oder Seitenwänden des Bauteils begrenzt wird. Durch diesen Hohlraum, der beispielsweise durch eine Klappe oder andere Verschlussmittel verschließbar ist, wird ein zusätzliches Staufach zum Unterbringen von Gegenständen genutzt werden, die beispielsweise Flugbegleitern zugänglich gemacht werden müssen. Beispielhaft könnten dies etwa Demo-Kits zum Vorführen des An- und Abschnallvorgangs sein, Erste-Hilfe-Ausrüstungen, Decken und Kissen, Schwimmwesten, sowie persönliche Habseligkeiten und dergleichen.

Insgesamt schlägt die Erfindung eine vorteilhafte Anordnung zum Aufnehmen eines Vorhangs zum Abtrennen zumindest zweier Kabinenbereiche voneinander vor, die vollkommen flexibel mit unterschiedlichsten Vorhangschienen in einer Vielzahl von Einbaupositionen einsetzbar ist.

### Kurze Beschreibung der Zeichnungen

Die Erfindung wird nachfolgend anhand von Figuren näher erläutert. In den Figuren stehen gleiche Bezugszeichen für gleiche Objekte. Es zeigen:
- Fig, 1:: eine Anordnung zum Aufnehmen und Verkleiden eines Vorhangs in einer Flugzeugkabine aus dem Stand der Technik;
- Fig. 2:: eine Auswahl von unterschiedlichen Vorhangschienen im Stand der Technik;
- Fig. 3:: ein erstes Ausführungsbeispiel der erfindungsgemäßen Anordnung;
- Fig. 4:: ein zweites Ausführungsbeispiel der erfindungsgemäßen Anordnung mit Staufachfunktion;
- Fig. 5:: eine Draufsicht auf die Aufnahmeseite zum Aufnehmen eines Vorhangs der erfindungsgemäßen Anordnung;
- Fig. 6:: eine Draufsicht auf die Aufnahmeseite zur Aufnahme eines Vorhangs der erfindungsgemäßen Anordnung mit eingebauter Vorhangschiene;
- Fign. 7a bis 7c:: eine Draufsicht auf die Aufnahme zum Aufnehmen eines Vorhangs mit einer angebrachten Vorhangschiene in mehreren Positionen.

### Detaillierte Beschreibung exemplarischer Ausführungsbeispiele

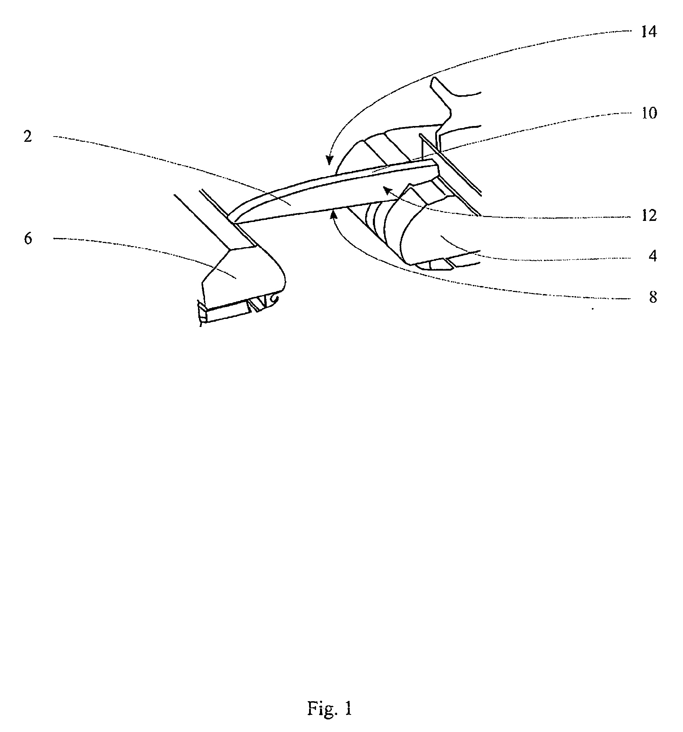

Fig. 1 zeigt eine gewöhnliche Anordnung 2 zur Aufnahme eines Vorhangs bzw. einer Vorhangschiene aus dem Stand der Technik, die üblicherweise auch als "Header Panel" oder "Curtain Header" bezeichnet wird. In diesem dargestellten Falle wird die Anordnung 2 zwischen zwei Über-Kopf-Staufächern 4 und 6 (auch "Overhead Stowage Compartment" oder "Hatrack" genannt). Die Unterseite 8 der Anordnung 2 ist eben und dient zur Aufnahme einer Vorhangschiene zur Halterung eines Vorhangs, der zum Abtrennen zumindest zweier Kabinenbereiche voneinander eingesetzt wird. Die Oberseite 10 der Anordnung 2 ist gekrümmt und schmiegt sich bevorzugt an die Kabinendecke an, so dass mit dem Vorhang zusammen eine vollständig licht- und blickdichte Abtrennung zweier Kabinenbereiche von der Kabinendecke bis zum Kabinenfußboden geschaffen werden kann. Die Seiten 12 und 14 der Anordnung 2 werden durch Verkleidungspaneele gebildet, auf denen auch Hinweisschilder und dergleichen angeordnet werden können.

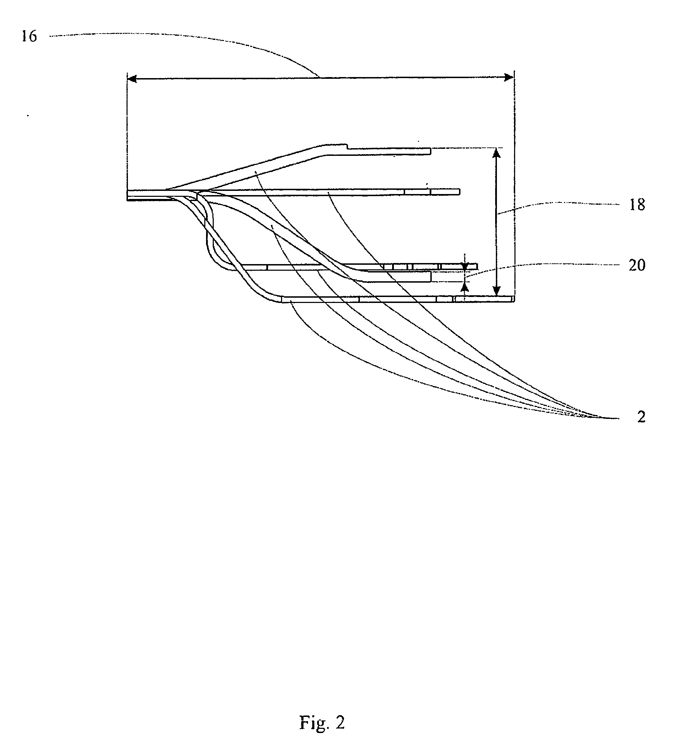

Da die Einbaupositionen einer solchen Anordnung 2 (sprich, eines Curtain Headers) von dem Kabinenlayout des Flugzeugs abhängt, ist eine nahezu unbegrenzte Anzahl von verschiedenen Anordnungen 2 denkbar, wie anhand der Konturenverläufe in Fig. 2 dargestellt. Die dargestellten Anordnungen 2 sind - bis auf eine Ausnahme - gebogen, abgewinkelt oder weisen einen insgesamt gekrümmten Verlauf auf. Die seitliche Erstreckung 16 quer zur Flugrichtung sowie die Erstreckung in Längsrichtung 18 parallel zur Flugrichtung ist bei allen dargestellten Anordnungen 2 unterschiedlich. Werden dementsprechend in der Kabinenkonfiguration Monumente, Trennwände oder andere Einbauten umgestaltet bzw. umkonfiguriert, wird eine neue Vorhangschiene und damit eine neue Anordnung 2 zum Aufnehmen und Verkleiden dieser Vorhangschiene notwendig, die eine neue Erstreckung in Längsrichtung 18 oder in seitlicher Richtung 16 aufweist. Weiterhin sind die Dicken 20 der Anordnungen 2 ebenfalls mitunter unterschiedlich, so dass jede Einbausituation zu einer individuell gestalteten Anordnung 2 führt.

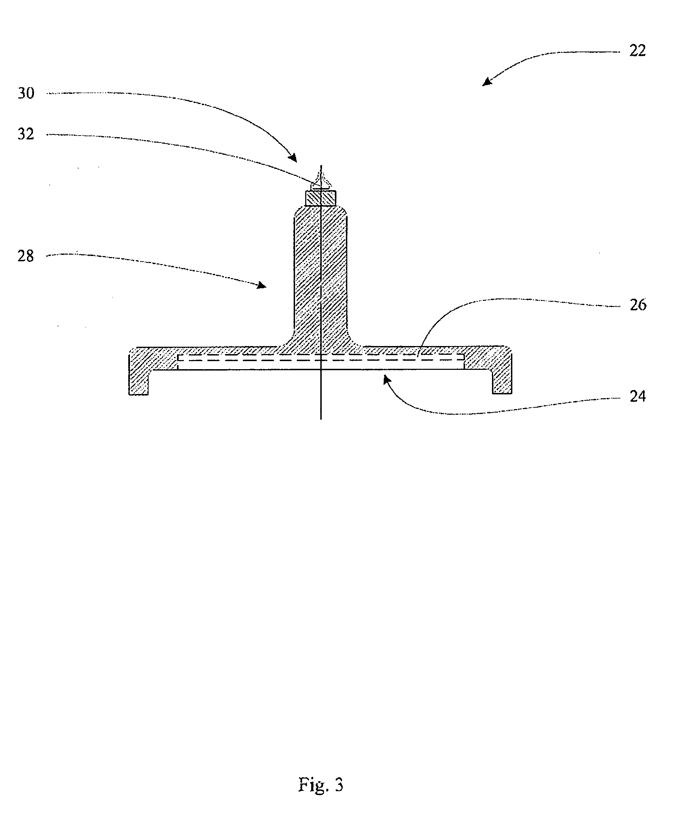

In Fig. 3 wird eine erfindungsgemäße Anordnung 22 zum Aufnahmen und Verkleiden einer Vorhangschiene 22 dargestellt, deren Querschnitt parallel zur Flugrichtung gezeigt wird. Die erfindungsgemäße Anordnung 22 ist an ihrer Unterseite 24 eben geformt, in die mehrere Schienen 26 zur variablen Befestigung einer Vorhangschiene angeordnet sind. Die Schienen 26 verlaufen bevorzugt parallel zur Flugrichtung und erstrecken sich über einen wesentlichen Bereich der erfindungsgemäßen Anordnung 22 in Flugrichtung. In die Schienen 26 sind - in der Darstellung aus Fig. 3 nicht ersichtlich - Anschraubpunkte einbringbar, die im Wesentlichen entlang der Schienen 26 verschiebbar gelagert sind. In diese Anschraubpunkte können Schrauben, Bolzen oder andere ein Gewinde aufweisende Befestigungsmittel eingeschraubt werden, die eine Vorhangschiene an den Anschraubpunkten befestigen können. Durch Festschrauben der Vorhangschiene an diesen Anschraubpunkten werden die Anschraubpunkte innerhalb der Schienen 26 fixiert und sind danach bis zum Lösen der Verschraubung positionsunveränderlich in den Schienen 26 angeordnet.

Oberhalb der im Wesentlichen ebenen Unterseite 24 erstreckt sich die erfindungsgemäße Anordnung 22 nach oben in Richtung zur Kabinendecke. Dieser Bereich 28 dient als Sichtschutz zwischen einem in der Vorhangschiene gehalterten Vorhang und der Kabinendecke. Die Oberseite 30 der erfindungsgemäßen Anordnung 22 sollte demzufolge so ausgestaltet werden, dass sie sich an die Kabinendecke anschmiegt. Hierzu könnte sich aus diesem Grunde eine Art Dichtungsgummi bzw. eine Dichtungslippe 32 befinden, die sich beim Anschmiegen des oberen Bereichs 28 der erfindungsgemäßen Anordnung 22 an die Kabinendecke unterstützt.

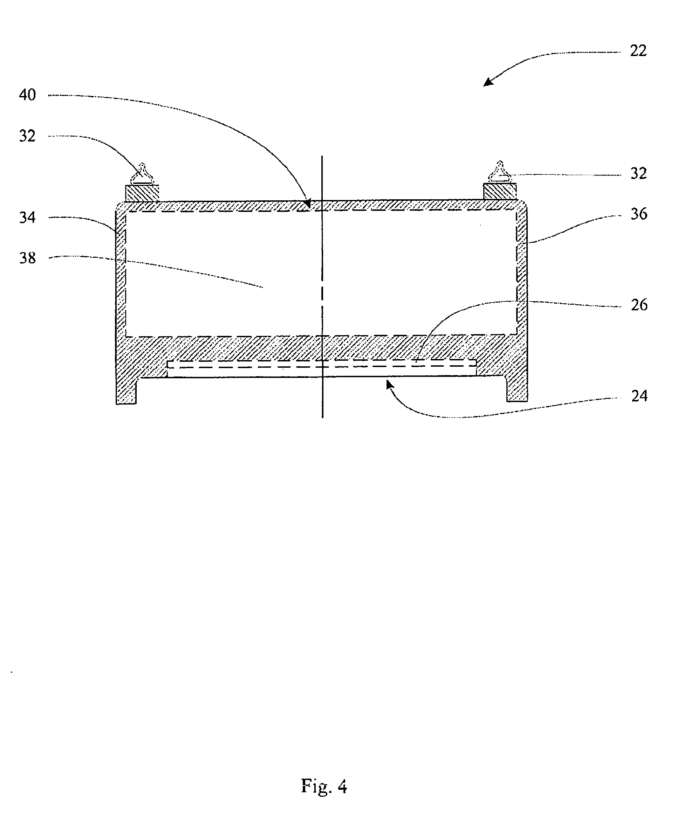

In Fig. 3 wird eine erfindungsgemäße Anordnung 22 gezeigt, die lediglich als Sichtschutz und als Anordnung zum Haltern eines Vorhangs dient. Fig. 4 hingegen zeigt eine erfindungsgemäße Anordnung 22, die nicht nur zur Halterung einer Vorhangschiene und als Sichtschutz fungiert, sondern auch als Staufach verwendet werden kann. Aus diesem Grunde ist der obere Bereich 28 aus Fig. 3 so verbreitert, dass sich zwischen zwei Seitenwänden 34 und 36 ein Hohlraum 38 erstreckt, der in gezeigtem Fall durch eine Deckplatte 40 nach oben zur Kabinendecke hin verschlossen ist. An dieser Deckplatte 40 befinden sich zu beiden Seiten jeweils Dichtungsgummis 32, die auch hier das bündige Anschmiegen der erfindungsgemäßen Anordnung 22 an die Kabinendecke ermöglichen. Der Hohlraum 38 könnte beispielsweise durch Klappen oder andere Verschlussmittel gegenüber der Kabine verschlossen werden und bevorzugt dem Flugbegleitungspersonal zur Aufbewahrung von persönlichen Habseligkeiten oder anderen Dingen, wie etwa Demo-Kits, Erste-Hilfe-Pakete und dergleichen verwendet werden.

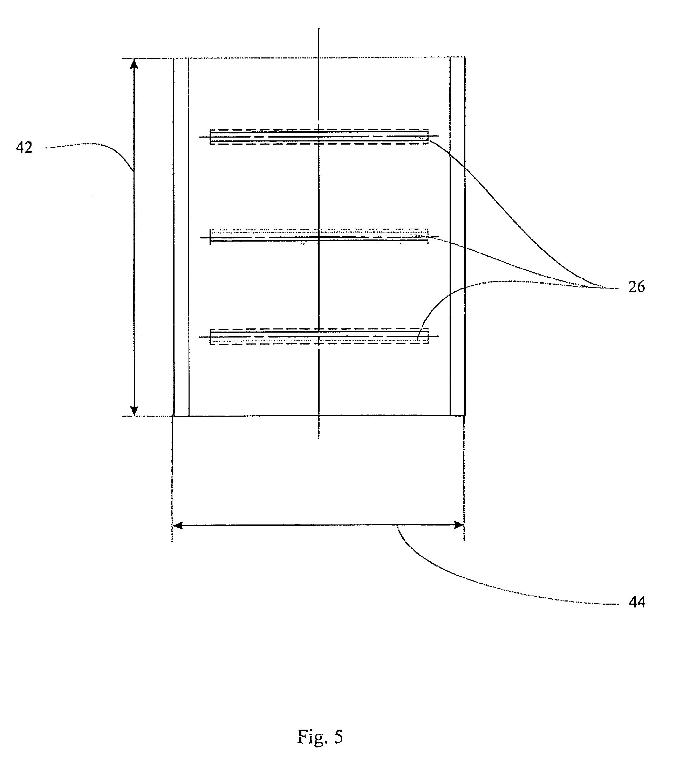

In Fig. 5 wird eine Unterseite 24 einer erfindungsgemäßen Anordnung 22 gezeigt, die exemplarisch drei Schienen 26 zum Aufnehmen einer Vorhangschiene aufweist. Die drei Schienen 26 verlaufen im Wesentlichen parallel und mit gleichmäßigen Abständen zueinander. Die Erstreckung in seitlicher Richtung 42 der erfindungsgemäßen Anordnung 22 sollte bevorzugt der seitlichen Erstreckung 16 der in Fig. 2 gezeigten Anordnungen 2 entsprechen. Falls bei der Integration in die Kabine notwendig, kann eine erfindungsgemäße Anordnung 22 auf eine entsprechend einbaubare Breite 42 leicht gekürzt werden. Die Erstreckung in Längsrichtung 44 könnte dabei der maximalen Erstreckung 18 herkömmlicher Anordnungen 2 - beispielsweise ca. 500mm - entsprechen, so dass möglichst alle Varianten eines Kabinenkonzepts mit einer einzigen, standardisierten erfindungsgemäßen Anordnung 22 realisiert werden können. Andere Erstreckungen 18 im Bereich zwischen den üblichen Maßen von um 25mm bis 500m sind jedoch abhängig vom Flugzeug-/Fahrzeugtyp denkbar.

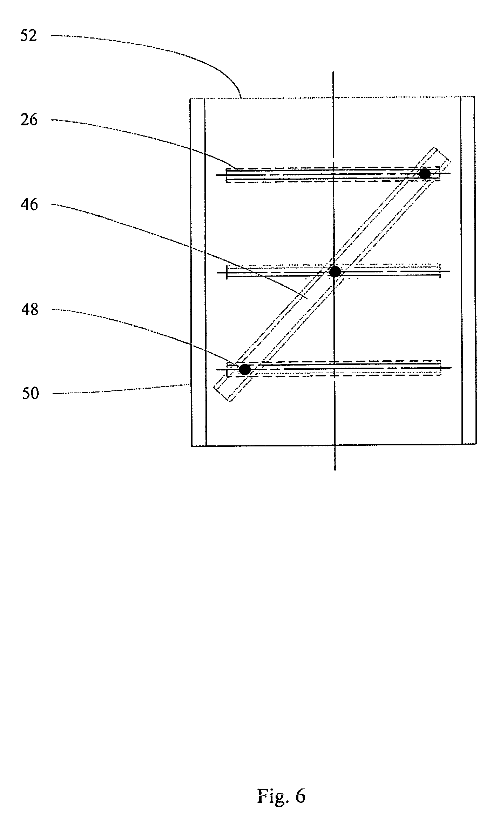

In Fig. 6 wird eine eingesetzte Vorhangschiene 46 dargestellt, die im Wesentlichen eine gerade Form aufweist und mittels drei Anschraubpunkten 48 in drei Schienen 26 montiert ist. In dem dargestellten Anwendungsfall wird die Vorhangschiene zwischen zwei Einbauten versetzt in der Kabine montiert werden, so dass die Vorhangschiene 46 nicht parallel zu einer der Kanten 50 bzw. 52 der erfindungsgemäßen Anordnung 22 verläuft. Die Anschraubpunkte 48 könnten Körper sein, die eine solche Formgebung aufweisen, die mit dem Querschnittsprofilen der Schienen 26 korrespondiert, so dass sie zwar in Längsrichtung der Schienen 26 verschiebbar gelagert werden, jedoch ein Drehmoment in die Schienen 26 übertragen können und sich bei einem Schraubvorgang relativ zu den Schienen 26 nicht drehen können. Solche Körper könnten beispielsweise eine Buchse oder ähnliches aufweisen, die mit jeweils einem Gewinde ausgestattet ist. In dieses Gewinde lassen sich leicht Schrauben, Bolzen oder dergleichen einschrauben, um so die Vorhangschiene 46 an der erfindungsgemäßen Anordnung 22 zu befestigen. Durch das Anschrauben wird eine Druckkraft zwischen dem Anschraubpunkt 48 und dem jeweiligen Bereich der Vorhangschiene 46 ausgeübt, so dass sich hierdurch die Anschraubpunkte 48 in der dazwischen liegenden erfindungsgemäßen Anordnung 22 anpressen und damit fixieren. Durch Festschrauben der Vorhangschiene 46 mit ausreichender Kraft ist demnach eine sichere Halterung gewährleistet. Die Vorhangschienen müssen nicht gerade ausgeführt sein, sie können auch Krümmungen oder Knicke aufweisen oder jede andere geometrische Form annehmen, so lange die Bewegung der Vorhanggleiter in den Schienen gewährleistet bleibt.

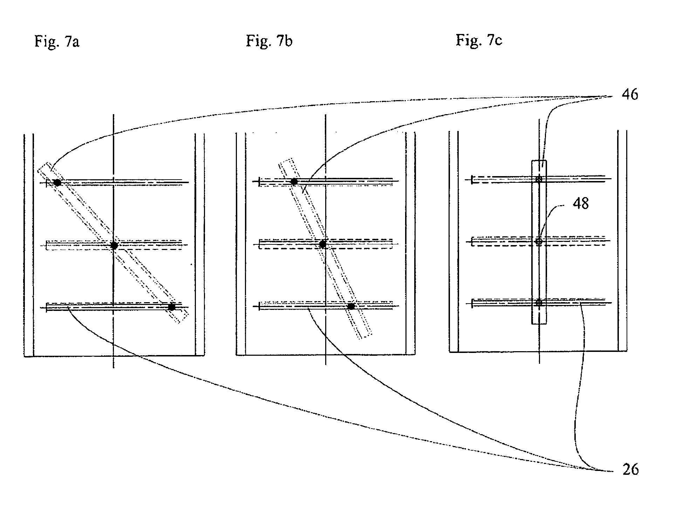

In den Figuren 7a bis 7c werden weitere Einbausituationen dargestellt, die je nach Kabinenkonfiguration denkbar sind. In Fig. 7c werden beispielsweise zwei Kabineneinbauten durch einen Trennvorhang ergänzt, der senkrecht zur Flugrichtung angeordnet wird. Solche Einbauten können beispielsweise zwei gegenüberliegend angeordnete Trennwände sein. In den anderen Fällen der Figuren 7a und 7b sind die entsprechenden und durch einen Trennvorhang zu überbrückenden Einbauten voneinander versetzt angeordnet, so dass die jeweilige Vorhangschiene 46 schräg in die erfindungsgemäße Anordnung 22 eingeschraubt werden muss. Es zeigt sich anhand der Figuren 7a bis 7c jedoch, dass bei entsprechender Auslegung der erfindungsgemäßen Anordnung 22 alle beliebigen Einbausituationen für ein entsprechendes Kabinenlayout innerhalb des Flugzeugs realisierbar sind.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichen:

- 2: Anordnung zur Aufnahme einer Vorhangschiene (Stand der Technik)
- 4: Über-Kopf-Staufach (Hatrack)
- 6: Über-Kopf-Staufach (Hatrack)
- 8: Unterseite der Anordnung
- 10: Oberseite der Anordnung
- 12: erste Seite der Anordnung
- 14: zweite Seite der Anordnung
- 16: seitliche Erstreckung der Anordnung
- 18: Erstreckung in Längsrichtung der Anordnung
- 20: Dicke der Anordnung
- 22: erfindungsgemäße Anordnung zum Aufnehmen einer Vorhangschiene
- 24: Unterseite der erf. Anordnung
- 26: Schiene
- 28: Erstreckung zur Kabinendecke der erf. Anordnung
- 30: Oberseite der erf. Anordnung
- 32: Dichtungslippe
- 34: Seitenwand
- 36: Seitenwand
- 38: Hohlraum
- 40: Deckplatte
- 42: Breite der erf. Anordnung
- 44: Erstreckung in Längsrichtung der erf. Anordnung
- 46: Vorhangschiene
- 48: Anschraubpunkt
- 50: erste Kante der er£ Anordnung
- 52: zweite Kante der erf. Anordnung

## Patentansprüche

1. Anordnung (22), aufweisend mindestens ein Bauteil und eine Vorhangschiene (46) für einen Vorhang zum Abtrennen mindestens zweier Bereiche in einer Kabine eines Fahrzeugs,
wobei das mindestens eine Bauteil eine Unterseite (24) und eine Oberseite (30) aufweist,
wobei die Unterseite (24) eine ebene Fläche aufweist und
wobei die Oberseite (30) derart geformt ist, dass die Anordnung in einem eingebauten Zustand in einer Kabine eines Fahrzeugs einen Zwischenraum zwischen der Vorhangschiene (46) und einer darüber angeordneten Decke der Kabine des Fahrzeugs verkleidet,
**dadurch gekennzeichnet, dass** die Unterseite (24) zwei oder mehr längliche und voneinander beabstandete Schienen (26) aufweist, in denen Anschraubkörper (48) als Anbindungspunkte zum Aufnehmen der Vorhangschiene (46) verschiebbar gelagert sind und
dass sich die Unterseite (24) des Bauteils in Längsrichtung und in Querrichtung weiter erstreckt als die Vorhangschiene (46).

2. Anordnung (22) nach Anspruch 1,
**dadurch gekennzeichnet, dass** die Anschraubkörper (48) eine Form aufweisen, die mit dem Profilquerschnitt der Schienen (26) zum Übertragen eines Drehmoments korrespondieren.

3. Anordnung (22) nach Anspruch 1,
**dadurch gekennzeichnet, dass** die Anordnung (22) ein oder mehrere Verkleidungselemente (28, 34, 36) aufweist, die sich an der Oberseite (30) des bauteils zu einer von der Vorhangschiene (46) abgewandten Seite hin erstrecken.

4. Anordnung (22) nach Anspruch 3,
**dadurch gekennzeichnet, dass** die Anordnung (22) zumindest zwei Verkleidungselemente (34, 36) aufweist, die an der Oberseite (30) des Bauteils einen Hohlraum (38) zur Benutzung als Staufach definieren.

5. Anordnung (22) nach Anspruch 1,
**dadurch gekennzeichnet, dass** die Oberseite (30) des Bauteils eine Form aufweist, die mit der Form der Decke der Kabine zum Anschmiegen der Anordnung (22) an die Decke der Kabine korrespondiert.

6. Anordnung (22) nach Anspruch 1,
**dadurch gekennzeichnet, dass** die Vorhangschiene (46) Langlöcher zum Verschrauben in den als Anschraubkörper ausgeführten Anbindungspunkten (48) aufweist.

7. Anordnung (22) nach Anspruch 1,
**dadurch gekennzeichnet, dass** die Schienen (26) im Wesentlichen quer zu einer Längserstreckung der Anordnung verlaufen.

8. Verwendung einer Anordnung (22) nach Anspruch 1 in einem Fahrzeug.

9. Verwendung nach Anspruch 8, **dadurch gekennzeichnet, dass** das Fahrzeug ein Flugzeug ist.

10. Flugzeug mit einer Anordnung (22) nach Anspruch 1.

## Claims

1. An arrangement (22), comprising at least one part and a curtain rail (46) for a curtain for partitioning at least two regions in a cabin of a vehicle,
wherein the at least one part comprises a bottom (24) and a top (30), wherein the bottom (24) comprises a planar surface and
wherein the top (30) is shaped in such a way that the arrangement in an installed state in a cabin of a vehicle covers the space between the curtain rail (46) and the ceiling of the cabin of the vehicle arranged above,
**characterized in that** the bottom (24) comprises two or more elongated rails (26) distanced from each other, in which screw-on bodies (48) as attachment points for receiving the curtain rail (46) are slidably held and
**in that** the bottom (24) of the part in longitudinal direction and in transverse direction extends further than does the curtain rail (46).

2. The arrangement (22) of claim 1,
**characterized in that** the screw-on bodies (48) comprise a shape that corresponds to the profile cross section of the rails (26) for transmitting a torsional moment.

3. The arrangement (22) of claim 1,
**characterized in that** the arrangement (22) comprises one or several trim elements (28, 34, 36) which extend at the top (30) of the part to a side facing away of the curtain rail (46).

4. The arrangement (222) of claim 3,
**characterized in that** the arrangement (22) comprises at least two trim elements (34, 36) which at the top (30) of the part define a hollow space (38) for use as a stowage compartment.

5. The arrangement (22) of claim 1,
**characterized in that** the top (30) of the part comprises a shape that corresponds to the shape of the ceiling of the cabin for the purpose of the arrangement (22) conforming to the ceiling of the cabin.

6. The arrangement (22) of claim 1,
**characterized in that** the curtain rail (46) comprises elongated holes for screwing in the screw-on bodies (48).

7. The arrangement (22) of claim 1,
**characterized in that** the rails (26) extend so as to be essentially parallel to a longitudinal extension of the arrangement.

8. The use of a arrangement (22) of claim 1 in a vehicle.

9. The use according to claim 8, wherein the vehicle is an aircraft.

10. An aircraft comprising a arrangement (22) of claim 1.

## Revendications

1. Agencement (22), présentant au moins un élément et un rail (46) pour un rideau destiné à séparer au moins deux zones dans une cabine d'un véhicule,
dans lequel l'au moins un élément présente une face inférieure (24) et une face supérieure (30),
dans lequel la face inférieure (24) présente une surface plane et
dans lequel la face supérieure (30) est formée de telle sorte que l'agencement, dans un état monté dans une cabine d'un véhicule, habille un espace intermédiaire entre le rail de rideau (46) et un plafond de la cabine du véhicule disposé au-dessus du rail,
**caractérisé en ce que** la face inférieure (24) présente deux rails (26) ou plus, oblongs et distants les uns des autres, dans lesquels des corps de vissage (48) sont montés coulissants sous forme de points de liaison destinés à recevoir le rail de rideau (46) et
**en ce que** la face inférieure (24) de l'élément déborde du rail de rideau (46) dans la direction longitudinale et dans la direction transversale.

2. Agencement (22) selon la revendication 1, **caractérisé en ce que** les corps de vissage (48) présentent une forme qui correspond à la section transversale en profil des rails (26) pour transmettre un couple.

3. Agencement (22) selon la revendication 1, **caractérisé en ce que** l'agencement (22) présente un ou plusieurs éléments d'habillage (28, 34, 36) qui s'étendent sur la face supérieure (30) de l'élément en direction d'une face opposée au rail de rideau (46).

4. Agencement (22) selon la revendication 3, **caractérisé en ce que** l'agencement (22) présente au moins deux éléments d'habillage (34, 36) qui définissent sur la surface supérieure (30) de l'élément une cavité (38) pour servir de compartiment de rangement.

5. Agencement (22) selon la revendication 1, **caractérisé en ce que** la face supérieure (30) de l'élément présente une forme qui correspond à la forme du plafond de la cabine pour que l'agencement (22) soit serré contre le plafond de la cabine.

6. Agencement (22) selon la revendication 1, **caractérisé en ce que** le rail de rideau (46) présente des trous oblongs destinés au vissage dans les points de liaison (48) réalisés sous la forme de corps de vissage.

7. Agencement (22) selon la revendication 1, **caractérisé en ce que** les rails (26) s'étendent sensiblement transversalement à une direction longitudinale de l'agencement.

8. Utilisation d'un agencement (22) selon la revendication 1 dans un véhicule.

9. Utilisation selon la revendication 8, **caractérisée en ce que** le véhicule est un avion.

10. Avion avec un agencement (22) selon la revendication 1.
